# EUROPEAN PATENT APPLICATION

(11) **EP 4 510 056 A1**
(43) Date of publication of application: **19.02.2025**
(21) Application number: 23191267.6
(22) Date of filing: 14.08.2023
(51) Int. Cl.: G06Q 10/0631, G06Q 10/0639, G06Q 50/04, G05B 19/418, G06N 5/022

(54) **SYSTEM AND METHOD FOR EFFICIENTLY RENDERING ONE OR MORE SCENES IN A COMPUTER SIMULATED ENVIRONMENT**

(71) Applicant: Siemens Aktiengesellschaft, 80333 München (DE)
(72) Inventor: DEB, Pallav Kumar, 781028 Guwahati (IN); SINGH, Saurabh Narayan, 81739 München (DE); SHARMA, Vinay, 560054 Bangalore (IN)
(74) Representative: Horn Kleimann Waitzhofer Schmid-Dreyer Patent- und Rechtsanwälte PartG mbB

(57) **Abstract**

Disclosed is a system, apparatus, method for efficiently rendering one or more scenes in a computer simulated environment. The method comprises receiving visual data from one or more data acquisition devices configured to acquire data pertaining to one or more entities interacting in an industrial environment. The method comprises identifying real-world scene from the industrial environment in real-time, wherein the real-world scene is identified using one or more machine learning models on the recevied visual data; fetching a preconfigured animated scene from a knowledge base based on a comparison with the identified real-world scene; rendering the preconfigured animated scene fetched from the knowledge base in the computer simulated environment; detecting a deviation in the real-world scene when compared with the preconfigured animated scene being rendered in the computer simulated environment; and rendering the real-world scene in the computer simulated environment in response to the detected deviation.

## Description

### TECHNICAL FIELD OF THE INVNETION

The present invention generally relates to computer simulated environments, and more specifically to a method and system for efficiently rendering one or more scenes in a computer simulated environment.

### BACKGROUND OF THE INVENTION

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical HoT (Industrial Internet of Things) solution in a metaverse would include capturing the real-world data and then rendering the same in the industrial environment in a photorealistic manner to provide an immersive experience to the user. In an industrial environment, such as for manufacturing plants or factory floor, there are numerous machines and corresponding standard operating procedures that the operators/workers need to follow for optimum functioning of the industrial environment. The metaverse simulations can be used in such cases to schedule and train workers/operators using photorealistic rendering of scenarios and immersing them in a virtual world to create real-world experiences. For example, a manufacturing plant hosts a digital workflow for repairing a machine in a VR space. Employees log into the virtual space via VR, meet in a shared space via 3D avatars, and communicate to repair the machine together.

However, recreation of real-world objects along with their motion in real-time in a virtual environment requires resource-rich information along with adequate computing power to process and make inferences. Changes in the actual environment should be readily visible in the virtual environment in near real-time to avoid discounting critical decision windows. In the current scenarios, solutions to the above-mentioned issues are addressed using high-speed networking (5G/6G) and high-configuration GPU servers. It should also be understood that such high speed networking and high configuration GPU servers are resource and energy intensive and thereby increasing carbon footprint of such virtual environments. Furthermore, even with such state-of-art solutions, lags, delays, and inconsistencies are observed when rendering objects in the metaverse. Furthermore, such delays and lags are even more prominent when there are multiple participants in the scene to be rendered. It should be noted that this problem becomes more noticeable when there are network interruptions in transmission. Another challenge arises when there are several collaborators in the same virtual environment. Therefore, when continuous movements of the objects get hindered, the animations start appearing fragmented, thereby significantly degrading the quality of experience of the users in the virtual environment.

In the light of the above, there exists a need to provide a system and method for efficiently rendering one or more scenes in the computer simulated environment in an energy efficient manner.

### SUMMARY OF THE INVENTION

The object of the invention is to provide a system and method for managing access control for a plurality of digital twins interacting in a computer simulated environment over a distributed network.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

Throughout the present disclosure, the term "one or more entities" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. The one or more entities may also include automated systems such as automated robots, semi-automated robots, remote-controlled robots, robotic arms, etc. that are employed in the industrial environment to perform an operation or task. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. The one or more entities also refer to personnels employed in the industrial environment who perform one or more actions to achieve an objective or output in the industrial environment.

Throughout the present disclosure, the term "computer simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of one or more animated scenes being rendered corresponding to the plurality of entities interacting in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be one or more entities being rendered in the computer simulated collaborative environment or metaverse.

The metaverse can be realized by a hosting environment. The hosting environment can be for example be implemented as a cloud environment, an edge-cloud environment and/or on specific devices, e.g., mobile devices.

Throughout the present disclosure, the term "distributed network" as used herein refers to a network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

Throughout the present disclosure, the term "one or more data acquisition devices" refer to any electronic device configured for capturing, acquiring, and transmitting data from the industrial environment to the apparatus. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus for further processing. In an embodiment, the visual data comprises at least one of a static image data and dynamic image data.

Throughout the present disclosure, the term "one or more machine learning algorithms" refer to computer vision machine learning models for analyzing one or more scenes acquired from the data acquisition devices. The one or more machine learning models are computational algorithms that leverage statistical techniques and data to automatically learn patterns, associations, or representations from input data, such as visual data from data acquisition devices. The model is designed to generalize and make predictions or decisions without explicit programming, based on the knowledge extracted from the training data. The model can be trained, validated, and tested using a dataset that comprises input features and corresponding target labels or outcomes. The machine learning model can take various forms, including but not limited to:

Supervised Learning Models: These models are trained with labeled data, where the input features are associated with known target labels. The model learns to map input data to output labels, enabling prediction or classification tasks for unseen data.

Unsupervised Learning Models: These models are trained with unlabeled data, aiming to identify hidden patterns, clusters, or structures in the input data without explicit target labels. They are used for tasks like clustering, anomaly detection, or dimensionality reduction.

Semi-Supervised Learning Models: These models utilize a combination of labeled and unlabeled data during training, leveraging the information from both labeled and unlabeled samples to improve performance.

Reinforcement Learning Models: These models learn through interactions with an environment, receiving feedback in the form of rewards or penalties based on actions taken. The model optimizes its behavior over time to achieve specific goals or maximize cumulative rewards.

The machine learning model is capable of generalizing its learning to new, unseen data, allowing it to make accurate predictions, classifications, or decisions in real-world scenarios.

Throughout the present disclosure, the term `knowledge graph' as used herein refers to a directed graph that may be represented by using a visual graphical presentation. Knowledge graph organizes information in the form of nodes and edges. The knowledge graph may be a directed labeled graph having associated domain specific meanings with nodes and edges. Anything can act as a node, for example, people, company, computer, etc. An edge label captures the relationship of interest between the nodes, for example, a friendship relationship between two people, a customer relationship between a company and person, or a network connection between two computers, etc.The object of the invention is achieved by a method for efficiently rendering one or more scenes in a computer simulated environment. The method comprises receiving visual data from one or more data acquisition devices configured to acquire data pertaining to one or more entities interacting in an industrial environment. The method comprises identifying a real-world scene from the industrial environment in real-time. Herein, the real-world scene is identified using one or more machine learning models on the recevied visual data. The method comprises fetching a preconfigured animated scene from a knowledge base based on a comparison with the identified real-world scene. Herein, the knowledge base comprises a plurality of preconfigured animated scenes derived from a knowledge graph repository comprising information pertaining to one or more real-world scenes in the industrial environment. The method comprises rendering the preconfigured animated scene fetched from the knowledge base in the computer simulated environment. Herein, the rendered preconfigured animated scene is in synchronization with the identified real-world scene in real-time. The method comprises detecting a deviation in the real-world scene when compared with the preconfigured animated scene being rendered in the computer simulated environment. The method comprises rendering the real-world scene in the computer simulated environment in response to the detected deviation.

According to an embodiment, the method of rendering the real-world scene in response to the detected deviation further comprises determining the one or more entities impacted by the deviation in the real-world scene. The method of rendering the real-world scene in response to the detected deviation comprises rendering the real-world scene pertaining to determined one or more entities impacted by the deviation in the computer simulated environment.

According to an embodiment, the method of rendering the real-world scene in response to the detected deviation further comprises rendering the preconfigured animated scene for the one or more entities not impacted by the deviation in the computer simulated environment.

According to an embodiment, the method of fetching the preconfigured animated scene from the knowledge base based on a comparison with the identified real-world scene further comprises identifying an activity being performed in the real-world scene acquired from the industrial environment using one or more machine learning models. The method comprises determining one or more tasks that are to be performed to execute the identified activity. The method comprises arranging the one or more tasks of the identified activity in a sequence of events as per a probability of occurrence of the one or more tasks. The method comprises fetching the one or more preconfigured animated scenes from the knowledge base based on the comparison of the one or more tasks in the identified activity with the plurality of preconfigured animated scenes stored in the knowledge base using one or more machine learning models.

According to an embodiment, the method of fetching the preconfigured animated scene from the knowledge base further comprises queuing the one or more preconfigured animated scenes for rendering in the computer simulated environment in synchronization with the real-world scene based on the arrangement of the determined one or more tasks in the identified activity.

According to an embodiment, the method of queuing the preconfigured animated scene for rendering in the computer simulated environment further comprises parallely processing each of the preconfigured animated scene for rendering in the computer simulated environment based on the arrangement of the determined one or more tasks in the identified activity.

According to an embodiment, the method of detecting the deviation in the real-world scene when compared with the preconfigured animated scene further comprises identifying the one or more tasks in the real-world scene that are not in the arrangement of the determined one or more tasks in the identified activity. The method comprises detecting the deviation in the real-world scene based on a deviation detected in the one or more tasks in the arrangement when compared with the real-world scene.

According to an embodiment, the one or more entities comprises at least one of: one or more objects, one or more personnels, or a combination thereof.

According to an embodiment, the method further comprises generating a knowledge graph from the visual dat. Herein, the knowledge graph is a first knowledge graph comprising scene information pertaining to the one or more entities interacting in the industrial environment. The method of generating the knowledge graph comprises detecting one or more entities from the real-world scene of the industrial environment. The method comprises determining a state of each of the one or more detected entities represented by a node in the first knowledge graph and interaction of each of the one or more entities with one another represented by edges in the first knowledge graph. The method comprises generating the first knowledge graph with the determined nodes and edges for the one or more detected entities. The method comprises storing the first knowledge graph in a first knowledge graph repository. Herein, the first knowledge graph repository is a public repository.

The method according to any of the preceding claims, further comprising generating a knowledge graph from the visual data. Herein, the knowledge graph is a second knowledge graph comprising scene information pertaining to the one or more personnels interacting in the industrial environment. Herein, generating the knowledge graph comprises detecting one or more personnels from the real-world scene of the industrial environment. The method comprises determining behavioral attribute of each of the one or more detected personnels represented by one or more nodes in the second knowledge graph and relationship of behavioral attribute of each of the one or more personnels with other one or more entities represented by edges in the second knowledge graph. The method comprises generating the second knowledge graph with the determined nodes and edges for the one or more detected personnels. The method comprises storing the second knowledge graph in a second knowledge graph repository. Herein, the first knowledge graph repository is a public repository.

The method further comprising generating animated scenes using the first knowledge graph and the second knowledge graph, wherein the method of generating preconfigured animated scenes comprises detecting one or more entities in the real-world scene acquired from the industrial environment using one or more machine learning models. The method comprises determining one or more nodes in the first knowledge graph that correspond to the one or more detected entities. Herein, the one or more entities are objects, personnels or a combination thereof. The method comprises detecting one or more actions being performed in the real-world scene acquired from the industrial environment using one or more machine learning models. The method comprises determining one or more edges in the first knowledge graph that correspond to the one or more actions being performed in the real-world scene that relate to the one or more nodes. The method comprises determining one or more nodes and edges in the second knowledge graph that correspond to a behavior of the personnels detected in the real-world scene. The method comprises combining the objects in the determined one or more nodes and the actions in the determined one or more edge of the first knowledge graph and the behavior of the detected personnels from the second knowledge graph in order to define an animated scene. The method comprises generating the animated scene based on definition using metadata associated with each of the one or more nodes in the first knowledge graph and the second knowledge graph.

According to an embodiment, the first knowledge graph and the second knowledge graph are stored in a distributed ledger.

The object of the invention is also achieved by an apparatus for efficiently rendering one or more scenes in a computer simulated environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for efficiently rendering one or more scenes in a computer simulated environment. The system comprises a computer simulated collaborative environment rendering one or more scenes corresponding to real-world assets in an industrial environment. The system comprises a distributed network communicatively coupled to the computer simulated environment. Herein, the distributed network comprises one or more nodes for storing information in the knowledge graphs. The apparatus is communicatively coupled to the distributed network and the computer simulated collaborative environment. The apparatus is configured for efficiently rendering one or more scenes in a computer simulated environment according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

### BRIEF DESCRIPTION OF THE EMBODIMENTS

The present invention is further described hereinafter with reference to illustrated embodiments shown in the accompanying drawings, in which:
FIG 1 is a block diagram of a system for efficiently rendering one or more scenes in a computer simulated environment, according to an embodiment of the present invention;
FIG 2 is a block diagram of an exemplary distributed ledger implemented for efficiently rendering one or more scenes in a computer simulated environment, according to an embodiment of the present invention;
FIG 3 is a block diagram of an exemplary apparatus for efficiently rendering one or more scenes in a computer simulated environment, according to an embodiment of the present invention;
FIG 4 is a flowchart depicting steps of a method for efficiently rendering one or more scenes in a computer simulated environment, according to an embodiment of the present invention;
FIG 5 is a flowchart depicting steps of a method for fetching preconfigured animated scenes from a knowledge base, according to an embodiment of the present invention;
FIG 6 is a flowchart depicting steps of a method for generating a first knowledge graph from the visual data, according to an embodiment of the present invention;
FIG. 7 is a flowchart depicting steps of a method for generating a second knowledge graph from the visual data, according to an embodiment of the present invention;
FIG 8 is a flowchart depicting steps of a method for generating animated scenes using the first knowledge graph and the second knowledge graph, according to an embodiment of the present disclosure; and
FIG 9 is a flowchart depicting a sequence of events as determined for a particular activity in a scene, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

### DETAILED DESCRIPTION OF THE EMBODIMENTS

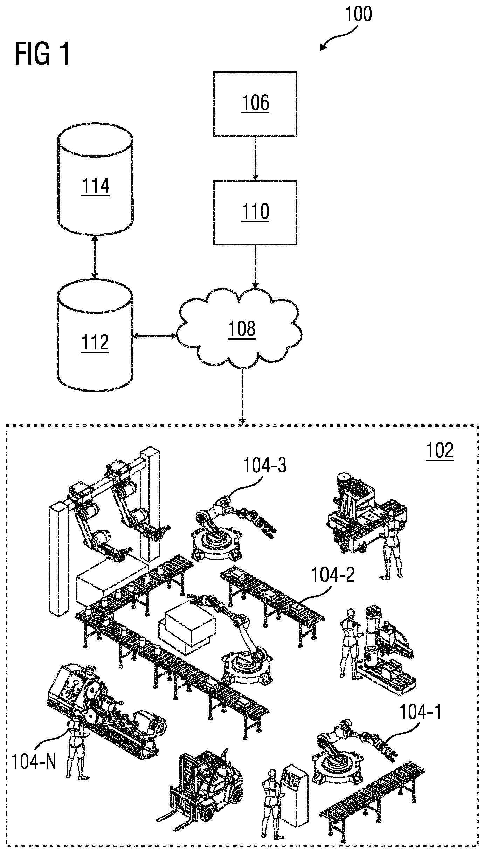

FIG 1 is a block diagram of a system 100 for efficiently rendering one or more scenes in a computer simulated environment, according to an embodiment of the present invention. The system 100 comprises a computer simulated environment 102, one or more entities 104-1 to 104-N being rendered on the computer simulated environment 102, one or more data acquisition devices 106, an apparatus 110, and a knowledge base 112 communicating over a communication network 108. The system 100 further comprises a knowledge graph repository 114 communicatively coupled to the knowledge base 112 and the apparatus 110. The computer simulated environment 102 three-dimensional (3D) representation of a real or physical world. It can be understood as a virtual world representing one or more entities 104-1 to 104-N of the real-world such as assets, machines, robots, operators, workers, operators etc. The computer-simulated environment 102 is accessible by a user, i.e., it is accessible from the real/physical world. In particular, the computer-simulated environment 102 can be understood as the "metaverse". It is also possible to interact with the computer-simulated environment 102, i.e., to influence or use processes, components and/or functions in the computer-simulated environment 102. The user or the avatar may interact with the objects rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more animated scenes being rendered corresponding to the plurality of entities interacting in the industrial environment. The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

The one or more entities 104-1 to 104-N maybe assets, devices, machinery, robots, equipment, workers, operators, supervisors in the industrial environment. The one or more entities 104-1 to 104-N are captured using one or more data acquisition devices 106 and then rendered on the computer simulated environment 102. Throughout the present disclosure, the term "one or more data acquisition devices" refer to any electronic device configured for capturing, acquiring, and transmitting data from the industrial environment to the apparatus. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus for further processing. In an embodiment, the visual data comprises at least one of a static image data and dynamic image data.

Throughout the present disclosure, the term "knowledge base" 112 refers to a database having stored the preconfigured animated scenes derived from a knowledge graph repository comprising information pertaining to one or more real-world scenes in the industrial environment. The knowledge base 112 may be a structured or non-structured collection of data or information stored in a computer-readable format. The knowledge base 112 comprises one or more tables, each consisting of rows and columns, where data is organized, stored, and managed. The data within the database can include text, numbers, images, audio, video, or any other form of electronic data. The knowledge base 112 is designed to efficiently store, retrieve, and manipulate large volumes of data, enabling rapid access and retrieval of information for various applications. It provides a centralized repository for organizing and managing data, facilitating data integrity, consistency, and security. The data within the knowledge base 112 can be accessed, modified, or queried through a database management system (DBMS), which provides a set of software tools and interfaces to interact with the database. The DBMS allows users or applications to perform operations such as inserting, updating, deleting, or searching for data within the knowledge base 112. The knowledge base 112 is a database which may be of various types, including but not limited to relational databases, NoSQL databases, distributed databases, in-memory databases.

Throughout the present the term "knowledge graph repository" 114 refers to a data storage system designed to manage and organize structured data in the form of a knowledge graph. The repository comprises a collection of interconnected nodes and edges, where nodes represent entities or objects, and edges represent relationships or associations between these entities. The knowledge graph repository 114 is built to efficiently store, retrieve, and query large volumes of interconnected data, facilitating the representation and exploration of complex relationships and dependencies among entities. The repository is equipped with query and traversal capabilities that allow users or applications to perform operations such as searching, navigating, or reasoning over the interconnected data. It enables the retrieval of relevant information, inferencing of new relationships, and identification of patterns or insights within the knowledge graph. The knowledge graph repository 114 may support various data models, including but not limited to property graph model, RDF (Resource Description Framework) model, hybrid models and so forth. In the context of the present invention, the knowledge graph repository 114 stored the first knowledge graph and the second knowledge graph.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 110 may include a module for managing access control for a plurality of digital twins 102-1 to 102-N interacting in a computer simulated collaborative environment over a distributed network.

Particularly, the system 100 comprises a cloud computing device configured for providing cloud services for managing access control for a plurality of digital twins 102-1 to 102-N interacting in a computer simulated collaborative environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

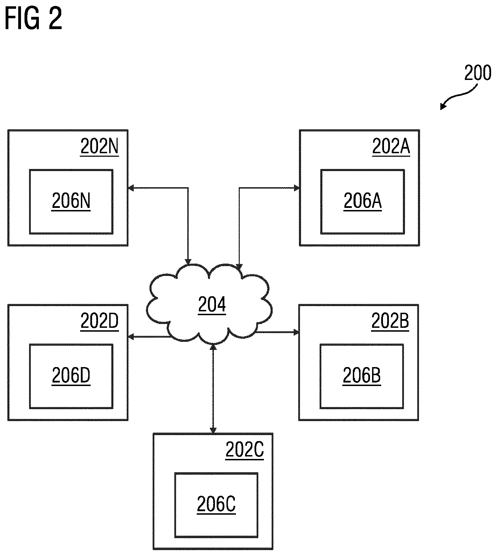

In an exemplary embodiment, the system 100 is implemented as a distributed ledger, wherein distributed ledger has nodes. Each node may belong to an entity and each of the nodes use the cloud computing hardware and OS to perform one or more actions in the distributed ledger. Each of the nodes comprise a computing device having a module and a database. One such exemplary embodiment is explained in further detail in conjunction with FIG 2.

FIG 2 is a block diagram of an exemplary distributed ledger 200 implemented using the system for storing data in the first knowledge graph and the second knowledge graph, according to an embodiment of the present invention. In particular, the one or more distributed ledgers 200 (e.g., blockchain network) may be provided across one or more contributors over a network 204. Exemplary contributors 202A-N may include individual computing devices associated with workers, operators, contractors, users, inspectors, visitors, and so on who provide data from the factory floor. The contributors 202A-N may store the distributed ledgers on computing systems which may be utilized in maintaining and/or updating the distributed ledgers. Each contributor 202A-N may be configured for storing a version of the distributed ledger or a portion thereof.

In some examples, the distributed ledger 200 is a blockchain based ledger wherein events and transactions are verified by the network participants in a decentralized manner and recorded on all participant nodes. Every node is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. This program is executed in an isolated secure environment on all nodes and verified in a distributed manner.

In some embodiments, the entities 202A-N include at least a set of computing devices 206A-N. For example, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

In the context of this invention, the ledger stores the first knowledge graph and the second knowledge graph. It should be understood that the first knowledge graph containing information pertaining to states and actions of one or more entities maybe stored in a public blockchain. Furthermore, the second knowledge graph containing information pertaining to behavioral attributes of personnels is stored in a private blockchain. Further, the ledger and ledger entries may utilize encryption technology to facilitate and/or validate digital signatures, for example, facilitating multi-signature documentation, ensuring the authenticity and integrity of assets, operators, and so on.

Each of the one or more contributors 202A-N may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating), for example, a supermajority or a unanimous consent between entities may be enforced as a condition to an activity relating to an entry. In some embodiments, distributed ledgers are utilized, and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

For example, a distributed ledger may be distributed across contributors 202A-N and used to provide data pertaining to various activities, assets, processes in the industrial environment. The distributed ledger may have entries linked to one another using cryptographic asset information, contractor information, operator information, and entries in the blockchain may be ordered, time stamped, and/or associated with metadata such that the blockchain is designed for protection against "double" transfers and unauthorized modification of ledger entries, such as violation of policies.

In some embodiments, each block includes respective unique identifiers associated with one or more entities 202A-202N along with corresponding transaction data. The block also includes a timestamp indicating when the block was created. If there is more than one block in the blockchain, each block beyond a first block further includes a hash of a previous block in the blockchain.

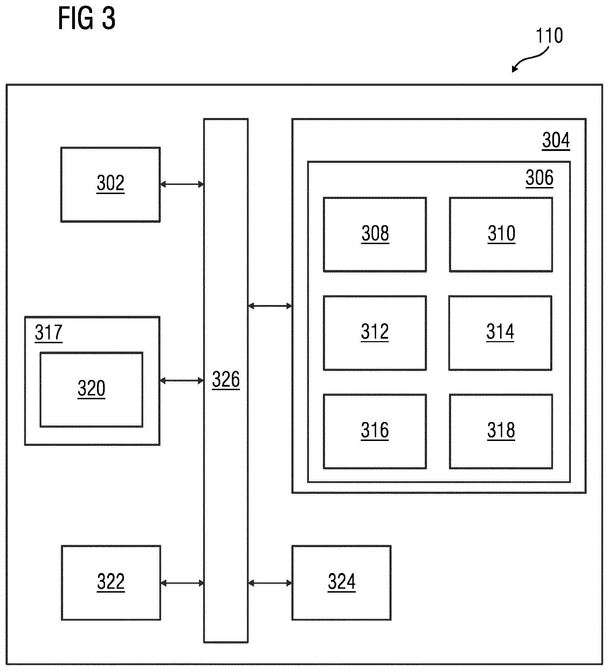

FIG 3 is a block diagram of an exemplary apparatus 110 for is a block diagram of an exemplary apparatus for efficiently rendering one or more scenes in a computer simulated environment, according to an embodiment of the present invention. The apparatus 110 may also be associated with different nodes in the distributed ledger to generate a decentralized network of one or more user devices in the industrial environment. In an exemplary embodiment, the apparatus 110 is communicatively coupled to the computer simulated environment 102 rendering one or more entities 104-1 to 104-N, the one or more data acquisition devices 106, the knowledge base 112, and the knowledge graph repository 114. In another exemplary embodiment, specific to a blockchain network, the apparatus 110 is integrated with the computing devices 206A-N of FIG 2) associated with the nodes 202A-N.

The apparatus 110 may be a personal computer, a laptop computer, a tablet, a server, a virtual machine, and the like. The apparatus 110 includes a processing unit 302, a memory 304 comprising a module 306, a storage unit 317 comprising a database 320, an input unit 322, an output unit 324 and a bus 326.

The processing unit 302 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 304 may be non-transitory volatile memory and/or nonvolatile memory. The memory 304 may be coupled for communication with the processing unit 302, such as being a computer-readable storage medium. The processing unit 302 may execute instructions and/or code stored in the memory 304. A variety of computer-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 304 includes the module 306 stored in the form of machine-readable instructions on any of the above-mentioned storage media and may be in communication to and executed by the processing unit 302. When the machine-readable instructions are executed by the processing unit 302, the module 306 causes the processing unit 302 to efficiently render one or more scenes in a computer simulated environment.

The module 306 further comprises a data acquisition module 308, scene identification module 310, knowledge graph generator module 312, scene fetching module 316, deviation detection module 318, and rendering module 320.

The data acquisition module 308 is configured for acquiring visual data from the industrial environment. The data acquisition module 308 is configured for acquiring data pertaining to the one or more entities 104-1 to 104-N interacting in the industrial environment. The data acquisition module 175 is configured for acquiring data in one or more formats that may comprises at least one of a static image data, dynamic image data, signal data and acoustic data. The data acquisition module 175 is configured for pre-processing of data recevied from the one or more data acquisition devices. The data acquisition module 308 is configured for acquiring visual data from the data acquisition devices such as image sensors, camera modules, digital cameras, surveillance cameras, aerial imaging devices, 3D imaging devices, thermal imaging devices, wearable cameras and the like.

The scene identification module 310 is configured for identifying a real-world scene from the industrial environment in real-time. The scene identification module 310 is configured for identifying the scene using one or more machine learning models on the visual data recevied from the data acquisition module 308. The scene identification module 310 is configured for preprocessing the visual data to enhance the quality, reduce noise, or normalize the data for better output. Further, the scene identification module 310 is configured for extracting relevant features such as visual descriptors including color, texture, shape, edges or key points. These features are derived to represent distinctive characteristics of objects, scenes, or patterns within the images. The scene identification module 310 is configured for analyze the extracted features and then identifying objects or elements within it. Further, the scene identification module 310 performs object detection, semantic segmentation, scene classification and depth estimation using the one or more machine learning models for respective tasks in scene identification. A further capability of the scene identification module 310 is to understand the real-world and classify the one or more entities in the scene as "objects" and "personnels" in the identified scene.

The knowledge graph generator module 312 is configured for generating a knowledge graph from the output of the scene identification module 310. The knowledge graph generator module 312 is configured for generating a first knowledge graph representing objects and their interaction with the environment. Furthermore, the knowledge graph generator module 312 is configured for generating a second knowledge graph for representing behaviors of the personnels in the industrial environment.

The knowledge graph generator module 312 is configured for determining the nodes and edges of the knowledge graph by identifying a state of each of the one or more entities from the scene identification module 310. The nodes and edge of the knowledge graph as identified based on entity extraction, attribute recognition, and relationship extraction models. Further, once the objects, entities, attributes, and relationships are identified, knowledge graph generator module 312 is configured for constructing a knowledge graph that represents the structured knowledge extracted from the scene. A knowledge graph is a graph-based representation that captures entities as nodes and relationships as edges, enabling efficient organization, querying, and retrieval of information. In particular, the first knowledge graph is generated for object activity and behaviors and the second knowledge graph is generated for personnel activity and behaviors in the industrial environment. Further, the knowledge graph generator module 312 is configured to store the first knowledge graph in a public repository and the second knowledge graph in a private repository.

The animated scene generator module 314 is configured for generating animated scenes using the first knowledge graph and the second knowledge graph. When the one or more entities are detected in the real-world scene, the animated scene generator module 314 is configured for selecting the one or more nodes in the first knowledge graph that correspond to the one or more detected entities. The animated scene generator module 314 is configured for detecting one or more actions being performed in the real-world scene acquired from the industrial environment using the one or more machine learning models.

The scene fetching module 316 is configured for fetching a preconfigured animated scene from the knowledge base based on a comparison with the identified real-world scene. The scene fetching module 316 is configured for determining an activity being performed in the real-world scene acquired from the data acquisition module 308. The scene fetching module 316 is configured to determine one or more tasks that are to be performed to execute the identified activity. The scene fetching module 316 is configured to arrange the one or more tasks of the identified activity in a sequence of events as per a probability of occurrence of the one or more tasks. The scene fetching module 316 is configured for queuing the preconfigured animated scene for rendering in the computer simulated environment based on the arrangement of the determined one or more tasks in the identified activity. Further, the scene fetching module 316 is configured to fetch the preconfigured animated scene from the knowledge base based on the one or more tasks in the queue in synchronization with the real-world scene.

The deviation detection module 318 is configured for continuously monitoring the real-world scene and comparing the sequence of events in the real-world with the sequence of events of the preconfigured animation. The deviation detection module 316 is configured for detecting an anomaly or a deviation in the real-world scene that is different than expected sequence of events to be performed. The deviation detection module 318 detects the deviation and generates a trigger to render the real-world scene in the computer simulated environment 102. The deviation detection module 318 is configured to determine the one or more entities impacted by the deviation. Furthermore, the deviation detection module 318 would only generate a trigger for the one or more entities impacted by the deviation, and other entities are continued to be rendered as per the preconfigured animation recevied from the scene fetching module 316.

The rendering module 320 is configured for rendering the preconfigured animated scene fetched from the knowledge base in the computer simulated environment. Further, the rendering module 320 is configured for rendering real-world scenes in the computer simulated environment in response to a deviation detected in the real-world scene.

The processing unit 302 is configured for performing all the functionality of the module 306. The processing unit 302 is configured to receiving visual data from one or more data acquisition devices configured to acquire data pertaining to one or more entities interacting in an industrial environment. The processing unit 302 is configured to identify a real-world scene from the industrial environment in real-time. Herein, the real-world scene is identified using one or more machine learning models on the recevied visual data. The processing unit 302 is configured to fetch a preconfigured animated scene from a knowledge base based on a comparison with the identified real-world scene. Herein, the knowledge base comprises a plurality of preconfigured animated scenes derived from a knowledge graph repository comprising information pertaining to one or more real-world scenes in the industrial environment. The processing unit 302 is configured to render the preconfigured animated scene fetched from the knowledge base in the computer simulated environment. Herein, the rendered preconfigured animated scene is in synchronization with the identified real-world scene in real-time. The processing unit 302 is configured to detect a deviation in the real-world scene when compared with the preconfigured animated scene being rendered in the computer simulated environment. The processing unit 302 is configured to render the real-world scene in the computer simulated environment in response to the detected deviation.

The storage unit 317 comprises the database 320 for storing first knowledge graph and second knowledge graph. The storage unit 317 and/or database 320 may be provided using various types of storage technologies, such as solid state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving set of requirements for generating scenes of a particular area in a factory floor, factory floor models details for storage in the first knowledge graph, worker behavior model details for storage in the second knowledge graph etc. The display unit 324 may provide ports to output data via output device with a graphical user interface for displaying one or more scenes in the computer simulated virtual environment. The bus 326 acts as interconnect between the processing unit 302, the memory 304, the storage unit 317, the input unit 322, and the display unit 324.

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

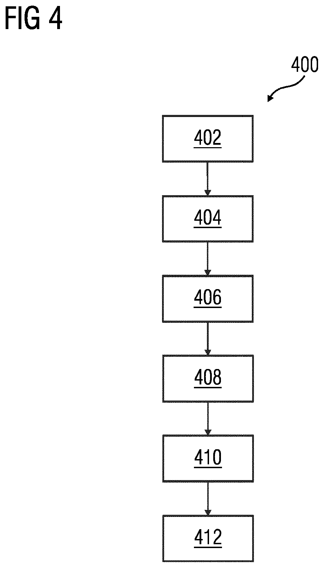

FIG 4 is a flowchart depicting steps of a method 400 for efficiently rendering one or more scenes in a computer simulated environment, according to an embodiment of the present invention.

At step 402, visual data from one or more data acquisition devices is received. The one or more data acquisition devices are configured to acquire data pertaining to one or more entities interacting in an industrial environment. In an embodiment, the one or more entities comprises at least one of: one or more objects, one or more personnels, or a combination thereof.

Throughout the present disclosure, the term `data acquisition devices' refers to any electronic device configured for capturing, acquiring, and transmitting data from the industrial environment to the apparatus 110. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus 110 for further processing. In an embodiment, the visual data comprises at least one of a static image data and dynamic image data.

In an exemplary implementation, the data acquisition device is a camera configured to capture still image data and/or video image data of the one or more physical devices such as meters, HMIs or any other physical device with a display installed in the facility. The term "camera" is understood to represent anything from one camera to a group of cameras arranged in a suitable configuration and outputting one or more video feeds of corresponding covered areas of the industrial environment. In an example, the data acquisition device may be located in the facility; for example, the cameras may be disposed throughout the industrial environment, mounted at various locations therein. In another example, the data acquisition device may be integrated in an aerial vehicle; for example, the cameras may be mounted on a body of a drone and pointing to various directions therefrom to cover different areas of the industrial environment or pointing at a particular entitiy based on a set of requirements.

In another exemplary implementation, the data acquisition devices are surveillance cameras used for security and monitoring purposes. The surveillance cameras are designed to capture and record images or videos of specific areas or premises. Surveillance cameras may include features like night vision capabilities, motion detection, remote monitoring, and video analytics for intelligent video processing.

In another exemplary implementation, the data acquisition devices are 3D imaging devices that capture depth information along with visual imagery, enabling the creation of three-dimensional representations of objects or scenes. Such devices may use technologies like structured light, time-of-flight, stereo vision, or LiDAR (Light Detection and Ranging) to acquire 3D data.

In another exemplary implementation, the data acquisition devices are thermal imaging devices that capture infrared radiation emitted by assets in the factory floor to generate images based on temperature differences. Notably, this would provide additional information for quality scene generation during night or low-light conditions.

In another exemplary, implementation the data acquisition devices are wearable cameras that may be arranged on body of the workers/operator in order to enable system to capture visual data of the assets, machines or an activity being performed from the perspective of the workers/operators on the factory floor. Advantageously, the system can switch between different views when rendering the one or more scenes providing a more immersive experience to an avatar in the metaverse.

At step 404, a real-world scene is identified from the industrial environment in real-time. The real-world scene is identified using one or more machine learning models on the recevied visual data. The acquired visual data such as images and video data may undergo preprocessing steps to enhance the quality of the images or to remove noise or artifacts. Preprocessing techniques may include noise reduction, image filtering, color correction, or image enhancement algorithms. Further, the method involves extracting relevant features from the acquired images. Features can be various visual descriptors such as color, texture, shape, edges, or key points. These features are derived to represent distinctive characteristics of objects, scenes, or patterns within the images. The extracted features are then used to analyze the scene and identify one or more entities within it.

The method further involves employing object detection algorithms for identifying specific objects of interest within the scene, such as machines, conveyor belts, motors, levers, boxes, trolleys, robots, sensors, actuators, operators, workers, etc. This can be achieved using object recognition algorithms, machine learning techniques, or pattern matching approaches. Further, the visual data is meaningful regions or segments based on their visual characteristics. This can involve classifying each pixel or region into different categories, such as asset area, fire assembly area, conveyor belt area, and the like. The method further comprises employing on or more machine learning algorithms for scene classification of the visual data. Assigning a label or category to the entire scene based on its overall content. The method includes training machine learning models to recognize and classify scenes based on predefined categories, such as machine area, storage area, packing area, electrical area, etc. It should be understood that once the one or more entities are identified and analyzed, the method comprises recognizing or classifying the scene based on the identified one or more entities in the scene. This can involve comparing the extracted features with a database of known scenes or using machine learning algorithms to match the scene characteristics with predefined scene categories.

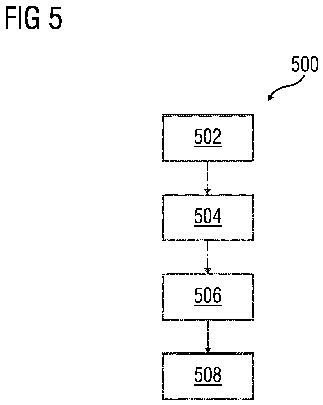

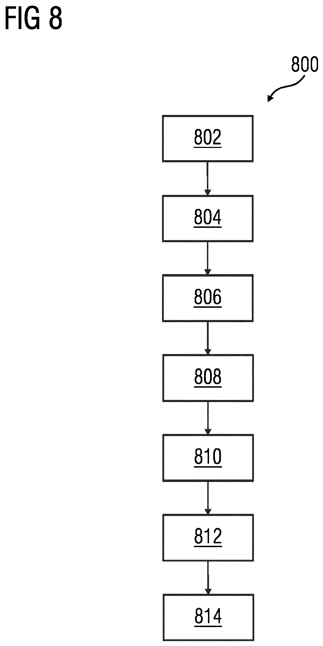

At step 406, a preconfigured animated scene is fetched from a knowledge base based on a comparison with the identified real-world scene. The knowledge base comprises a plurality of preconfigured animated scenes derived from a knowledge graph repository comprising information pertaining to one or more real-world scenes in the industrial environment. The preconfigured animated scenes are the scenes that are generated to be in synchronization with the real-world scene in the industrial environment. The preconfigured animated scenes are stored in the knowledge base against information pertaining to each real-world scene classification. The knowledge base stores the plurality of preconfigured animated scenes that are generated based on a knowledge graph stored in the knowledge graph repository. In an embodiment, the knowledge graph repository comprises a first knowledge graph and a second knowledge graph. The method of generation of animated scenes from the first knowledge graph and the second knowledge graph is explained later in detail in FIG 8. Furthermore, the method of fetching he preconfigured animated scene from the knowledge base is explained in further detail in FIG 5.

Referring to FIG 5, illustrated is a flowchart 500 depicting steps of a method for fetching preconfigured animated scenes from a knowledge base, according to an embodiment of the present invention. At step 502, an activity being performed is identified in the real-world scene acquired from the industrial environment using one or more machine learning models. The method involves extracting relevant features from the acquired data to capture the temporal and spatial characteristics of activities. Features can be derived from various modalities, including visual, audio, or sensor data. These features represent patterns, dynamics, or statistical properties that are informative for activity recognition.

The extracted features are used to build models that represent different activities or actions of interest. Various algorithms and techniques can be employed, including but not limited to:

Machine learning algorithms: Training models using supervised learning techniques such as Support Vector Machines (SVM), Random Forests, Convolutional Neural Networks (CNN), Recurrent Neural Networks (RNN), or other suitable classifiers. These models learn to recognize patterns and make predictions based on labeled training data.

Deep learning architectures: Utilizing deep neural networks to automatically learn hierarchical representations of features and capture complex temporal dynamics. This can involve architectures such as Long Short-Term Memory (LSTM), Convolutional Neural Networks (CNN), or Transformers, which excel at modeling sequential or spatial-temporal data.

Rule-based approaches: Defining sets of rules or logical conditions that specify patterns or constraints indicative of certain activities. These rules can be handcrafted or learned from expert knowledge or data. Hidden Markov Models (HMM) or Dynamic Bayesian Networks (DBN): Employing probabilistic models that capture the sequential dependencies between observed features and the underlying activities. These models can represent temporal dynamics and transitions between different activity states.

Furthermore, once the activity models are established, the method involves recognizing or classifying activities in real-world scenes. This can be done by applying the trained models to the extracted features and making predictions or decisions based on the learned patterns or statistical models.

In an example, the activity in an industrial environment may be a process in manufacturing such as assembling, machining, machining, molding, or fabricating components to create finished products. In another example, the activity in an industrial environment may be an assembly activity such as joining of different components or parts to create a final product. This can include tasks such as fitting, fastening, soldering, or welding components together. In another example, the activity in an industrial environment maybe a quality control activity that focus on ensuring that products or components meet specified standards and quality requirements. This can involve activities such as product testing, inspection, measurement, or sampling to identify defects, faults, or deviations from the desired quality. In another example, the activity in an industrial environment may be material handling activities such as the movement, storage, and transportation of raw materials, components, or finished products within the industrial environment. This can include tasks such as loading, unloading, packaging, storage, or logistics management. In another example, the activity in the industrial environment may be equipment setup and calibration activities such as the installation, configuration, and calibration of machinery, instruments, or equipment in the industrial environment. This can include tasks such as equipment installation, parameter adjustment, alignment, or system configuration.

At step 504, determining, by the processing unit, one or more tasks that are to be performed to execute the identified activity. The one or more tasks that are to be performed for the identified activity are unit steps that are be executed in order to complete a particular activity. It is to be understood that each of the one or more tasks are probable tasks that may occur in order to complete the activity.

At step 506, arranging, by the processing unit, the one or more tasks of the identified activity in a sequence of events as per a probability of occurrence of the one or more tasks. In an example, the one or more tasks that are identified and arranged in a sequence in the form of a Markov chain. Markov chain is a mathematical model that describes a sequence of events, where the probability of transitioning to the next state depends only on the current state and not on the previous history. It can be represented using a directed graph, where the nodes represent the states, and the edges represent the transition probabilities.

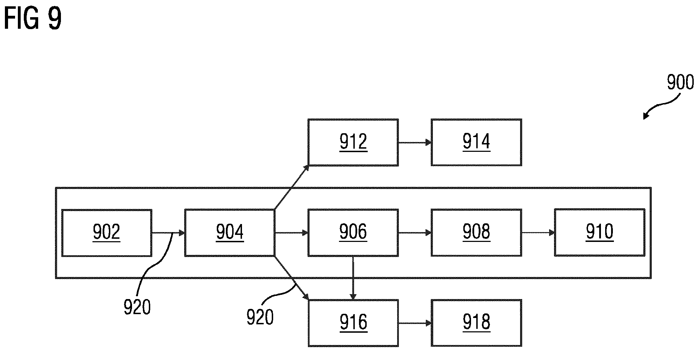

In an example, the one or more tasks identified from the activity represent the distinct states or events for a particular activity, and the transition probabilities represent the likelihood of transitioning from one task to another. The transition probabilities can be based on empirical data, theoretical analysis, or other relevant information related to the activity. This Markov chain can be represented using a directed graph where each task is represented by a node, and the edges connecting the nodes depict the transition probabilities. Such a simple Markov chain is explained in conjunction with FIG 9. Referring to FIG 9, illustrated is an exemplary Markov chain 900 defined for an activity, in accordance with an embodiment of the present disclosure. Herein, each of the one or more tasks are represented by nodes 902, 904, 906, 908, 910, 912, 914, 916, and 918. Each of the transition probabilities from one task to another are represented by edges numbered `920. Herein, the high-level activity is drinking water, then the node 902 represents the task of "holding a water container", the node 904 the task of "picking or moving the container", the node 906 represents the task of "drinking", the node 908 represents the task of "lowering or moving the container", the node 910 represents the task of "releasing the container". Further, the node 912, 914, represent other alternative set of tasks. Herein, the node 912 represents the task of "pouring the water into another container", and the node 914 represents the task of "drinking the water through a straw".

At step 508, the one or more preconfigured animated scenes are fetched from the knowledge base based on the comparison of the one or more tasks in the identified activity with the plurality of preconfigured animated scenes stored in the knowledge base using one or more machine learning models. The comparison of the identified one or more tasks with the plurality of preconfigured animated scenes is performed using the one or more machine learning models. The one or more machine learning models are trained to perform scene classification on each task and then map the same to one or more scenes in the knowledge base. The one or more animated scenes are fetched based on the mapping.

In an embodiment, the method fetching the preconfigured animated scene from the knowledge base further comprises queuing the one or more preconfigured animated scenes for rendering in the computer simulated environment in synchronization with the real-world scene based on the arrangement of the determined one or more tasks in the identified activity. The one or more tasks as arranged in the Markov chain are then arranged in a queue to be rendered in the computer simulated environment such that the rendering is in synchronization with the scenes identified from the real-world. In an embodiment, the method of queuing the preconfigured animated scene for rendering in the computer simulated environment based on the arrangement of the determined one or more tasks in the identified activity further comprises parallely processing each of the preconfigured animated scene for rendering in the computer simulated environment based on the arrangement of the determined one or more tasks in the identified activity. It is to be understood that each task in the Markov chain is processed and made ready for rendering in parallel such that a particular scene can be rendered in real-time or near real-time. Advantageously, such a method ensures faster rendering of the scenes as and when they are executed in the real-world.

Referring back to FIG 4, at step 408, the preconfigured animated scene fetched from the knowledge base are rendered in the computer simulated environment. The rendered preconfigured animated scene is in synchronization with the identified real-world scene in real-time. The techniques rendering of animated scenes in the computer simulated environment or the metaverse are known in art and hence not explained in detail for the brevity of the disclosure. At step 410, a deviation is detected in the real-world scene when compared with the preconfigured animated scene being rendered in the computer simulated environment. The deviation in real-world scene can be understood as a defect, anomaly, or aberration in a standard operating procedure of an activity in the industrial environment. In an example, a deviation in the activity such as movement of a conveyor belt is expected at V1 speed, but it is observed in the real-world scene that the movement of the conveyor belt is set at V2 speed. This would be a deviation in the real-world scene when compared to the one or more tasks determined in the Markov chain. In an embodiment, the method of detecting the deviation in the real-world scene when compared with the preconfigured animated scene further comprises identifying the one or more tasks in the real-world scene that are not in the arrangement of the determined one or more tasks in the identified activity. Further, the method comprises detecting the deviation in the real-world scene based on a deviation detected in the one or more tasks in the arrangement when compared with the real-world scene. In an example, a deviation in the factory floor may also be a movement of a worker/operator in an unauthorized direction.

At step 412, the real-world scene is rendered in the computer simulated environment in response to the detected deviation. Notably, when a deviation is detected in the real-world scene, the rendering of preconfigured animations is interrupted, and the real-world scene as observed in real-time is directly transmitted and rendered in the computer simulated environment. In an embodiment, the method of rendering the real-world scene in response to the detected deviation further comprises determining the one or more entities impacted by the deviation in the real-world scene. Once the one or more entities that impacted by the deviation are detected, the real-world scene pertaining to the determined one or more entities is rendered in the computer simulated environment. It should be understood that the entire scene rendering is not obstructed in case of a deviation in a particular scene. Advantageously, the method comprises segregation of impacted and non-impacted entities, and then the animated scene rendering of the impacted entities is obstructed only. In an embodiment, the rendering, of the preconfigured animated scene for the one or more entities not impacted by the deviation in the computer simulated environment is continued.

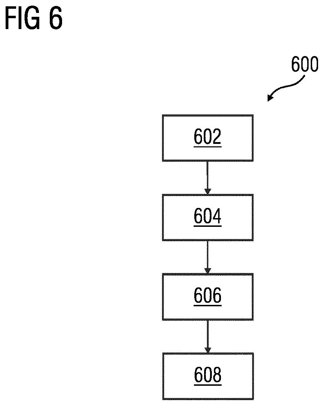

FIG 6 is a flowchart depicting steps of a method 600 for generating a first knowledge graph from the visual data, according to an embodiment of the present invention. Throughout the present disclosure, the term `knowledge graph' as used herein refers to a directed graph that may be represented by using a visual graphical presentation. Knowledge graph organizes information in the form of nodes and edges. The knowledge graph may be a directed labeled graph having associated domain specific meanings with nodes and edges. Anything can act as a node, for example, people, company, computer, etc. An edge label captures the relationship of interest between the nodes, for example, a friendship relationship between two people, a customer relationship between a company and person, or a network connection between two computers, etc. In an embodiment, the first knowledge graph comprises scene information pertaining to the one or more entities interacting in the industrial environment.

In the context of the present invention, for the first knowledge graph, the one or more nodes may be a state of the one or more entities such as assets, machines, components of machines, workpieces, robots, motors, actuators, workers, operators, users, customers, and so forth. The state of the node may be a position of the one or more personnels. The state of the node maybe a current operating state or position of a particular object at a particular instant of time. The one or more edges maybe the relationships between different nodes for example, interactions between the entities like: an action of moving an objects, an action of picking up a tool, an action of starting a conveyor belt etc. The first knowledge graph serves as a data structure in which an application stores the information pertaining to the one or more entities, their states and their actions/interactions with other entities. The data could be added to the knowledge graph through a combination of human input, automated and semi-automated methods. In an exemplary embodiment, the data is added into the knowledge graph in a secure distributed ledger. In an example, the distributed ledger is a blockchain network with multiple nodes pertaining to computing devices capable of adding data into the blockchain network. The data maybe images or videos of the industrial environment that maybe added into the blockchain network and then verified by experts/owners of the blockchain network to ensure that only relevant or accurate information is added in into the blockchain. The verified data is then analyzed and processed to be added as one or more nodes and edges in the first knowledge graph.

At step 602, one or more entities are detected from the real-world scene of the industrial environment. The detection of one or more entities can be done using one or more machine learning algorithms for scene analysis as explained above. At step 604, a state of each of the one or more detected entities is determined and represented by a node in the first knowledge graph. Further, the interaction of each of the one or more entities with one another is determined and represented by edges in the first knowledge graph. At step 606, the first knowledge graph is generated with the determined nodes and edges for the one or more detected entities. At step 604, the first knowledge graph is stored in a first knowledge graph repository. Herein, the first knowledge graph repository is a public repository.

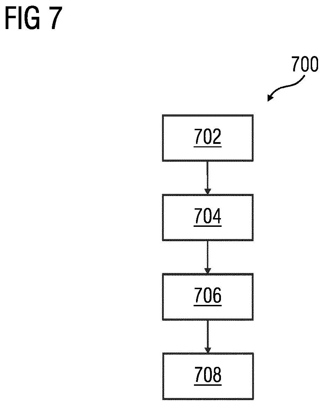

FIG. 7 is a flowchart depicting steps of a method 700 for generating a second knowledge graph from the visual data, according to an embodiment of the present invention. In an embodiment, the second knowledge graph comprises scene information pertaining to the one or more personnels interacting in the industrial environment. In the context of the present invention, for the second knowledge graph, the one or more nodes may be behavioral actions of the one or more personnels such as standing, posture, running, waliking, lifting, picking, throwing, and so forth. Each of the actions of the personnels maybe linked to other entities and other personnels. The one or more edges maybe the relationships between different nodes for example, interactions between the personnels and other entites like: an action of moving an objects, an action of picking up a tool, an action of starting a conveyor belt, an action of pulling a lever etc. It maybe understood that the second knowledge graph is comprises a worker profile of each of the workers/operators in the industrial environment. The second knowledge graph serves as a data structure in which an application stores the information pertaining to the one or more personnels, their behaviors and their actions/interactions with other entities. The data could be added to the second knowledge graph through a combination of human input, automated and semi-automated methods. In an exemplary embodiment, the data is added into the second knowledge graph in a secure distributed ledger. In an example, the distributed ledger is a blockchain network with multiple nodes pertaining to computing devices capable of adding data into the blockchain network. The data maybe images or videos of the behaviors of the personnels that maybe added into the blockchain network and then verified by authorities in the blockchain network to ensure that only relevant or accurate information is added in into the blockchain. The verified data is the added as one or more nodes and edges in the second knowledge graph.

At step 702, one or more personnels are detected from the real-world scene of the industrial environment. At step 704, behavioral attribute of each of the one or more detected personnels is determined and represented by one or more nodes in the second knowledge graph. Further, the relationship of behavioral attribute of each of the one or more personnels with other one or more entities is determined and represented by edges in the second knowledge graph. At step 706, the second knowledge graph is generated with the determined nodes and edges for the one or more detected personnels. At step 708, the second knowledge graph in a second knowledge graph repository. Herein, the first knowledge graph repository is a public repository. Advantageously, the second knowledge graph is stored in a private repository such that person specific information is not accessible publicly.

FIG 8 is a flowchart of a method 800 for generating animated scenes using the first knowledge graph and the second knowledge graph, according to an embodiment of the present disclosure.

At step 802, one or more entities in the real-world scene acquired from the industrial environment are detected using the one or more machine learning models. At step 804, one or more nodes are determined in the first knowledge graph that correspond to the one or more detected entities. Herein, the one or more entities are objects, personnels or a combination thereof. At step 806, one or more actions being performed in the real-world scene acquired from the industrial environment are detected using one or more machine learning models. At step 808, one or more edges in the first knowledge graph that correspond to the one or more actions being performed in the real-world scene that relate to the one or more nodes are determined. At step 810, one or more nodes and edges are determined in the second knowledge graph that correspond to a behavior of the personnels detected in the real-world scene. At 812, the objects in the determined one or more nodes and the actions in the determined one or more edges of the first knowledge graph and the behavior of the detected personnels from the second knowledge graph are combined in order to define an animated scene. At step 814, the animated scene is generated based on definition using metadata associated with each of the one or more nodes in the first knowledge graph and the second knowledge graph.

The present invention aims to provide a for efficiently rendering one or more scenes in a computer simulated environment. Advantageously, the present invention automatically generates animated scenes based on the knowledge graphs pertaining to one or more real-world scenes in the industrial environment. The present invention aims at saving computation power and bandwidth of the network by rendering preconfigured animated scenes for the industrial environment when the activities in the industrial environment are ongoing as per normal procedure. The real-time data is processed and rendered only when there is a deviation from the normal procedure. Furthermore, the present aids in rendering an energy efficient, seamless and near real-time metaverse. Moreover, the invention aims at enhancing user experience of the users in the metaverse by enabling efficient rendering of scenes in the metaverse. Furthermore, the present invention also aims at classifying confidential data pertaining to personnels and then storing such information in a private ledger, thereby maintaining confidentiality of personal data.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

### LIST OF REFERENCES

- 100: system
- 102: computer simulated environment
- 104-1 to 104-N: one or more entities
- 106: data acquisition devices
- 108: communication network
- 110: apparatus
- 112: knowledge base
- 114: knowledge graph repository
- 200: distributed ledger
- 202A-N: one or more contributors
- 204: network
- 206A-N: one or more computing devices
- 302: one or more processing units
- 304: memory unit
- 306: module
- 308: data acquisition module
- 310: scene identification module
- 312: knowledge graph generator module
- 316: scene fetching module
- 318: deviation detection module
- 320: rendering module
- 317: storage unit
- 320: database
- 322: input unit
- 324: output unit
- 326: bus
- 400: flowchart depicting steps of a method for efficiently rendering one or more scenes in a computer simulated environment
- 500: flowchart depicting steps of a method for fetching preconfigured animated scenes from a knowledge base
- 600: flowchart depicting steps of a method for generating a first knowledge graph from the visual data
- 700: flowchart depicting steps of a method for generating a second knowledge graph from the visual data
- 800: flowchart of a method for generating animated scenes using the first knowledge graph and the second knowledge graph
- 900: Markov chain defined for an activity

## Claims

1. A method for efficiently rendering one or more scenes in a computer simulated environment, the method comprising:
receiving, by a processing unit, visual data from one or more data acquisition devices configured to acquire data pertaining to one or more entities interacting in an industrial environment;
identifying, by the processing unit, a real-world scene from the industrial environment in real-time, wherein the real-world scene is identified using one or more machine learning models on the recevied visual data;
fetching, by the processing unit, a preconfigured animated scene from a knowledge base based on a comparison with the identified real-world scene, wherein the knowledge base comprises a plurality of preconfigured animated scenes derived from a knowledge graph repository comprising information pertaining to one or more real-world scenes in the industrial environment;
rendering, by the processing unit, the preconfigured animated scene fetched from the knowledge base in the computer simulated environment, wherein the rendered preconfigured animated scene is in synchronization with the identified real-world scene in real-time;
detecting, by the processing unit, a deviation in the real-world scene when compared with the preconfigured animated scene being rendered in the computer simulated environment; and
rendering the real-world scene in the computer simulated environment in response to the detected deviation.

2. The method according to claim 1, wherein rendering the real-world scene in response to the detected deviation further comprises:
determining, by the processing unit, the one or more entities impacted by the deviation in the real-world scene; and
rendering, by the processing unit, the real-world scene pertaining to determined one or more entities impacted by the deviation in the computer simulated environment.

3. The method according to any of the claims 1 or 2, wherein rendering the real-world scene in response to the detected deviation further comprises:
rendering, by the processing unit, the preconfigured animated scene for the one or more entities not impacted by the deviation in the computer simulated environment.

4. The method according to any of the preceding claims, wherein fetching the preconfigured animated scene from the knowledge base based on a comparison with the identified real-world scene further comprises:
identifying, by the processing unit, an activity being performed in the real-world scene acquired from the industrial environment;
determining, by the processing unit, one or more tasks that are to be performed to execute the identified activity;
arranging, by the processing unit, the one or more tasks of the identified activity in a sequence of events as per a probability of occurrence of the one or more tasks; and
fetching, by the processing unit, the one or more preconfigured animated scenes from the knowledge base based on the comparison of the one or more tasks in the identified activity with the plurality of preconfigured animated scenes stored in the knowledge base using one or more machine learning models.

5. The method according to claim 4, wherein fetching the preconfigured animated scene from the knowledge base further comprises queuing the one or more preconfigured animated scenes for rendering in the computer simulated environment in synchronization with the real-world scene based on the arrangement of the determined one or more tasks in the identified activity.

6. The method according to claim 5, queuing the preconfigured animated scene for rendering in the computer simulated environment further comprises:
parallely processing each of the preconfigured animated scene for rendering in the computer simulated environment based on the arrangement of the determined one or more tasks in the identified activity.

7. The method according to claim 5, wherein detecting the deviation in the real-world scene when compared with the preconfigured animated scene further comprises:
identifying, by the processing unit, the one or more tasks in the real-world scene that are not in the arrangement of the determined one or more tasks in the identified activity; and
detecting, by the processing unit, the deviation in the real-world scene based on a deviation detected in the one or more tasks in the arrangement when compared with the real-world scene.

8. The method according to any of the preceding claims, wherein the one or more entities comprises at least one of: one or more objects, one or more personnels, or a combination thereof.

9. The method according to any of the preceding claims, further comprising generating a knowledge graph from the visual data, wherein the knowledge graph is a first knowledge graph comprising scene information pertaining to the one or more entities interacting in the industrial environment, and wherein generating the knowledge graph comprises:
detecting, by the processing unit, one or more entities from the real-world scene of the industrial environment;
determining, by the processing unit, a state of each of the one or more detected entities represented by a node in the first knowledge graph and interaction of each of the one or more entities with one another represented by edges in the first knowledge graph;
generating, by the processing unit, the first knowledge graph with the determined nodes and edges for the one or more detected entities; and
storing, by the processing unit, the first knowledge graph in a first knowledge graph repository, wherein the first knowledge graph repository is a public repository.

10. The method according to any of the preceding claims, further comprising generating a knowledge graph from the visual data, wherein the knowledge graph is a second knowledge graph comprising scene information pertaining to the one or more personnels interacting in the industrial environment, and wherein generating the knowledge graph comprises:
detecting, by the processing unit, one or more personnels from the real-world scene of the industrial environment;
determining, by the processing unit, behavioral attribute of each of the one or more detected personnels represented by one or more nodes in the second knowledge graph and relationship of behavioral attribute of each of the one or more personnels with other one or more entities represented by edges in the second knowledge graph;
generating, by the processing unit, the second knowledge graph with the determined nodes and edges for the one or more detected personnels; and
storing, by the processing unit, the second knowledge graph in a second knowledge graph repository, wherein the first knowledge graph repository is a public repository.

11. The method according to any of the preceding claims, further comprising generating animated scenes using the first knowledge graph and the second knowledge graph, wherein the method of generating preconfigured animated scenes comprises:
detecting, by the processing unit, one or more entities in the real-world scene acquired from the industrial environment using one or more machine learning models;
determining, by the processing unit, one or more nodes in the first knowledge graph that correspond to the one or more detected entities, wherein the one or more entities are objects, personnels or a combination thereof;
detecting, by the processing unit, one or more actions being performed in the real-world scene acquired from the industrial environment using one or more machine learning models;
determining, by the processing unit, one or more edges in the first knowledge graph that correspond to the one or more actions being performed in the real-world scene that relate to the one or more nodes;
determining, by the processing unit, one or more nodes and edges in the second knowledge graph that correspond to a behavior of the personnels detected in the real-world scene;
combining, by the processing unit, the objects in the determined one or more nodes and the actions in the determined one or more edge of the first knowledge graph and the behavior of the detected personnels from the second knowledge graph in order to define an animated scene; and
generating, by the processing unit, the animated scene based on definition using metadata associated with each of the one or more nodes in the first knowledge graph and the second knowledge graph.

12. The method according to any of the preceding claims, wherein first knowledge graph and the second knowledge graph are stored in a distributed ledger.

13. An apparatus for efficiently rendering one or more scenes in a computer simulated environment, the apparatus comprising:
one or more processing units; and
a memory communicatively coupled to the one or more processing units, the memory comprising a module stored in the form of machine-readable instructions executable by the one or more processing units, wherein the module is configured to perform the method steps according to claims 1 to 12.

14. A system for efficiently rendering one or more scenes in a computer simulated environment, the system comprising:
a computer simulated collaborative environment rendering one or more scenes corresponding to real-world assets in an industrial environment;
a distributed network communicatively coupled to the computer simulated environment, wherein the distributed network comprises one or more nodes for storing information in the knowledge graphs; and
an apparatus according to claim 13, communicatively coupled to the distributed network and the computer simulated collaborative environment, wherein the apparatus is configured for efficiently render one or more scenes in a computer simulated environment, according to any of the method claims 1 to 12.

15. A computer-program product, having computer-readable instructions stored therein, that when executed by a processing unit, cause the processing unit to perform method steps according to any of the claims 1 to 12.

16. A computer readable medium on which program code sections of a computer program are saved, the program code sections being loadable into and/or executable in a system to make the system execute the method steps according to any of the claims 1 to 12 when the program code sections are executed in the system.
